# EUROPEAN PATENT SPECIFICATION

(11) **EP 2 929 772 B1**
(45) Date of publication and mention of the grant of the patent: **23.11.2016**
(21) Application number: 15162531.6
(22) Date of filing: 07.04.2015
(51) Int. Cl.: A01D 34/82, B60N 2/00, A01D 75/18, B60K 28/04

(54) **RIDING MOWER WITH CONTROL TAMPER APPARATUS**
AUFSITZRASENMÄHER MIT MANIPULATIONSSICHERER VORRICHTUNG
TONDEUSE AUTO-PORTÉE AVEC APPAREIL DE PROTECTION DE COMMANDE

(30) Priority: 09.04.2014 IT MI20140663
(43) Date of publication of application: 14.10.2015
(73) Proprietor: GGP Italy S.p.A., 31033 Castelfranco Veneto (TV) (IT)
(72) Inventor: Villanova, Marco, 31020 SERNAGLIA DELLA BATTAGLIA TV (IT)
(74) Representative: Mittler, Andrea

(56) References cited:
- EP-A1- 0 328 341
- EP-A1- 2 193 703
- FR-A1- 2 328 082
- US-A- 6 092 838
- US-A1- 2004 090 338

## Description

The present invention relates to a riding mower with control tamper apparatus.

Within the scope of gardening, riding mowers are a practically essential tool when cutting large areas, such as for example golf courses or lawns around shopping centres, hospitals, schools, parks, etc., is required.

In particular, motorized riding mowers with (seated) driver on board are known, which are equipped with a metal cutting member comprising one or more cutting elements freely rotating on a pin and mounted on a generally circular drive unit.

It is known from current legislation that the absence of the operator blocks certain utilities such as the motor; for example, if the operator leaves the seat of the mower, safety regulations provide for the motor to be automatically switched off and therefore the mower and the blades stop within the provided space/time limits.

For example, a safety device based on the presence of an operator on the seat is known from Patent MI2008A002159 to this Applicant. Under conditions with cutting elements enabled or mower running, such a safety device is capable of detecting when the operator is no longer present (for example, the operator falls from the mower or simply gets off it) and, in this case, it is configured to force an action such as to ensure a safe condition.

In particular, said safety device comprises a switch located below the driving seat and enclosed, together with the electrical wiring and cabling thereof, inside protective means. In operation, the switch closes only if there is a pressure given by the weight of the operator thereon and, in this case, the mower normally operates. Otherwise, when the operator is absent, the switch will be open and the safety device will switch off the motor or block the mower blades.

However, on the market, the safety of the system is increasingly often tampered with and thus excluded. Tampering often consists in removing the protective means and short-circuiting the contact of the switch (with a clip, a piece of wire or with other conductive objects), thus simulating the presence of the operator driving the mower, even when this is not the case.

In view of the state of the art, it is the object of the present invention to provide a riding mower with an apparatus adapted to recognize a tampering status of the safety device and, in this case, to keep the riding mower under safe conditions.

In accordance with the present invention, said object is achieved by means of a riding mower comprising at least one driving seat, a safety device which includes a transducer adapted to detect the presence of the operator on the seat and to provide a first electrical signal as a response, and a control unit adapted to manage the movement of the riding mower, said riding mower being characterized in that it comprises a control tamper apparatus configured to convert said first electrical signal into a second electrical signal, and if said second electrical signal is equal to a reference value, to provide said control unit with a control signal as a response.

The features and advantages of the present invention will become apparent from the following detailed description of a practical embodiment thereof, shown by way of non-limiting example in the accompanying drawings, in which:
figure 1 shows a riding mower according to the present invention;
figure 2 shows a detail of the riding mower in figure 1;
figure 3 shows a circuit block diagram of a control tamper apparatus included in the riding mower in figure 1.

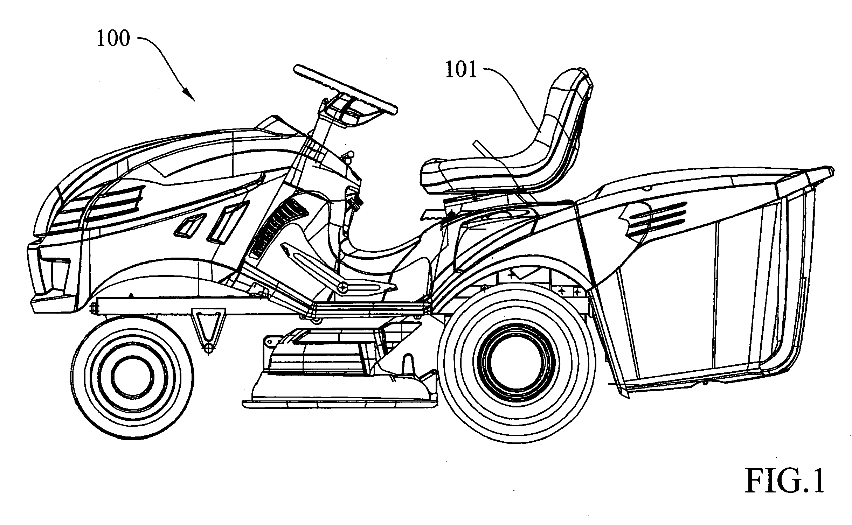

Figure 1 shows a riding mower 100 according to the present invention.

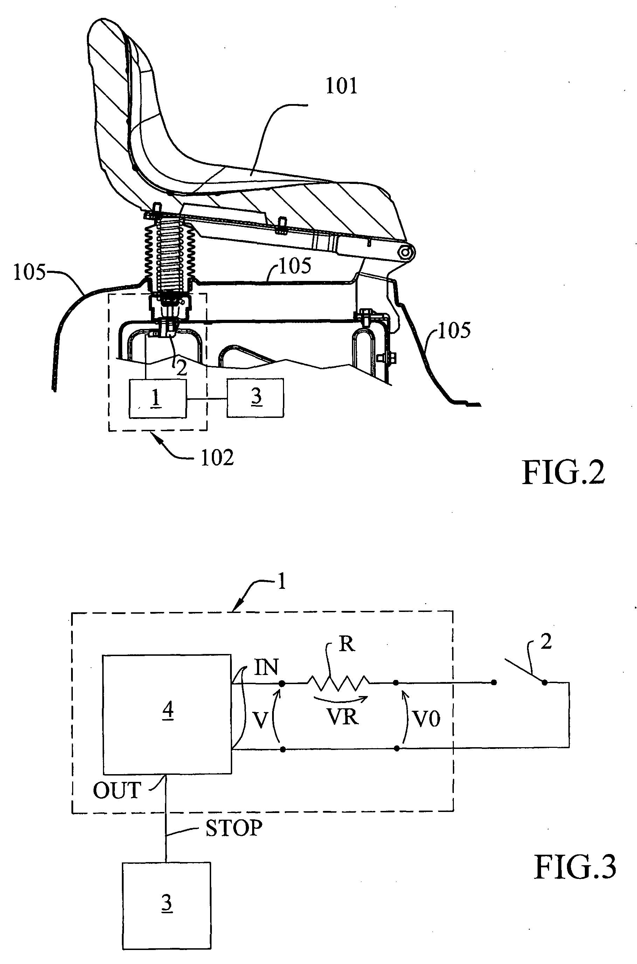

The riding mower 100 (Figs. 1, 2) comprises at least one driving seat 101, a safety device 102 which includes a transducer 2 adapted to detect the presence (or absence) of the operator on seat 101 and to provide a first electrical signal V0 as a response, and a control unit 3 adapted to electronically manage the movement of the riding mower 100.

The riding mower 100 (Figs. 2, 3) further comprises a control tamper apparatus 1, included in said safety control device 102, said control tamper apparatus being configured to convert said first electrical signal V0 into a second electrical signal V and, if said second electrical signal V is equal to a reference value Vref, to provide said control unit 3 with a control signal STOP as a response.

In this case, said control unit 3 provides for the electronic management of the movement of both the cutting elements (blades) enabled and the running of the riding mower 100.

Preferably, said transducer 2 is a switch placed below the driving seat 101 and is closed due to the pressure given by the weight of the operator on seat 101. In this case, the first electrical signal V0 is the voltage drop across switch 2 and is equal to zero if switch 2 is closed, otherwise have a certain finite value if it is open. Switch 2 is further enclosed by protective means 105 which isolate the switch, with its electrical wires and cabling, thus making them inaccessible to the operator in order to avoid any tampering. The control tamper apparatus 1 then comprises at least one electrical resistive component R connected in series to said switch 2.

Preferably, said at least one electrical resistive component R is a properly calibrated resistor, for example.

Moreover, said control tamper apparatus 1 comprises a microcontroller 4 comprising, in turn, at least one input IN adapted to receive said voltage drop V across the series of switch 2 and resistor R, and at least one output OUT adapted to provide, when the voltage drop V is equal to a value of reference voltage Vref, said control unit 3 with a control signal STOP.

Said microcontroller 4 is configured to detect the voltage drop V across the series of switch 2 and resistor R and, if said voltage drop V is equal to said value of reference voltage Vref, to provide said control unit 3 with a control signal STOP as a response.

The control signal STOP output from microcontroller 4 is adapted to drive, by means of the control unit 3, the blocking of the movement of the riding mower 100 so as to ensure a safe condition for the operator. For example, typical safe conditions may be grounding the spark plug coils, with subsequent switching off of the motor, or blocking the mower blades.

With regard to said value of reference voltage Vref, preferably it is a voltage value equal to zero (or negligible). This explains why old safety devices, which included only the switch, operated by recognizing two statuses:
- "operator present", with the switch closed (voltage equal to zero across the switch);
- "operator absent", with the switch open (finite voltage across the switch);

In the first case, the mower continued operating normally, in the second case safety measures were implemented on the riding mower.

This is why the most common tampering aims to short-circuit the accessible terminals of the old switch (which in other terms is equivalent to the voltage value 0V), so that the old safety device recognizes the "operator present" status and continues operating despite the operator not actually being present, thus representing a hazardous condition for the same.

Otherwise, microcontroller 4, included in the control tamper apparatus 1, is configured to recognize the following two normal operating statuses:
- "operator present", with switch 2 closed and a voltage drop V across the series of resistor R and switch 2 equal to V0+V_{R}=0+ V_{R}=VR, which is the voltage drop on resistor R;
- "operator absent", with switch 2 open and a finite voltage drop V equal to V0+Vr across the series of resistor R and switch 2.

In the first case, the riding mower 100 according to the present invention normally operates, in the second one, safety measures are implemented on the riding mower 100.

Since the accessible terminals of the safety system 102 are said ends of the series of resistor R and switch 2, it is easy to understand that in this case tampering with short-circuiting of the terminals will cause a status which does not fall under one of the previous two, that is:
- "hazardous status", with a voltage drop V across the series of resistor R and switch 2 equal to 0V (Vref) which will be recognized by microcontroller 4 in the same way as the "operator absent" status, thus implementing safety measures on the riding mower 100.

In operation, microcontroller 4 detects the voltage drop V across the series of resistor R and switch 2, while verifying that said voltage drop V is equal to the value of reference voltage Vref (0V). If this check has a positive result, microcontroller 4 sends a control signal STOP to the control unit 3 as a response. This is the case in which microcontroller 4 recognizes a tampering status and keeps the riding mower 100 under safe conditions, by grounding, by means of the control unit 3, the spark plug coils, with the subsequent switching off of the motor, or the blocking of the blades of the riding mower 100. Contrarily, as mentioned, microcontroller 4 continues detecting the voltage drop V and the riding mower 100 continues its normal operation.

The control tamper apparatus 1 disclosed above will thus be adapted to recognize a tampering status of the switch contact and, in this case, to keep the riding mower under safe conditions.

## Claims

1. Riding mower (100) comprising at least one driving seat (101), a safety device (102) which comprise a transducer (2) adapted to detect the presence of the operator on the driving seat (101) and to provide, as a response, a first electrical signal (VO), and a control unit (3) configured for the electronic management of the movement of the riding mower (100), said riding mower (100) being **characterized by** comprising a control tamper apparatus (1) configured for converting said first electrical signal (V0) in a second electrical signal (V) and, if said second electrical signal (V) is equal to a reference value (Vref), as a response provide a control signal (STOP) to said control unit (3).

2. Riding mower (100) according to claim 1, **characterized in that** said control tamper apparatus (1) comprises a microcontroller (4) in turn comprising at least one input (IN) configured to receive said second electrical signal (V), and at least one output (OUT) configured to provide said control signal (STOP) to said control unit (3).

3. Riding mower (100) according to any one of claims 1-2, **characterized in that** said control signal (STOP) is suitable to drive by means of the control unit (3) the blocking of the movement of the riding mower (100) for ensure a safe condition for the operator.

4. Riding mower (100) according to claim 1, **characterized in that** said transducer (2) is a switch, and **in that** said control tamper apparatus (1) comprises at least one electrical resistive component (R) connected in series with said switch (2), said control tamper apparatus (1) being configured to detect the voltage drop (V) across the series of the switch (2) and the at least one electrical resistive component (R) and, if said voltage drop (V) is equal to a reference value (Vref) to provide, as a response, said control signal (STOP) to said control unit (3).

5. Riding mower (100) according to claim 4, **characterized in that** said at least one electrical resistive component (R) is a resistor properly calibrated.

6. Riding mower (100) according to claim 4, **characterized in that** said value of the reference voltage (Vref) is a voltage value equal to zero (or negligible).

## Patentansprüche

1. Aufsitzmäher (100), aufweisend mindestens einen Fahrersitz (101), eine Sicherheitseinrichtung (102), welche über einen Detektor (2), der zur Detektion der Anwesenheit des Bedieners auf dem Fahrersitz (101) angepasst ist und der, als eine Antwort, ein erstes elektrisches Signal (V0) zur Verfügung stellt, und eine Steuereinheit (3), welche zur elektronischen Steuerung der Bewegung des Aufsitzmähers (100) konfiguriert ist, wobei der Aufsitzmäher (100) **dadurch gekennzeichnet ist, dass** er einen Steuerapparat (1) aufweist, welcher dazu konfiguriert ist, das erste elektrische Signal (V0) in ein zweites elektrisches Signal (V) umzuwandeln, und, falls das zweite elektrische Signal (V) gleich dem Referenzwert (Vref) ist, als Antwort einen Steuerbefehl (STOP) zu der Steuereinheit (3) zur Verfügung zu stellen.

2. Aufsitzmäher (100) nach Anspruch 1, **dadurch gekennzeichnet, dass** der Steuerapparat (1) einen Mikro-Controller (4) aufweist, mit wiederum mindestens einem Eingang (IN) der so konfiguriert ist, um das zweite elektrische Signal (V) zu empfangen, und mindestens einem Ausgang (OUT), der so konfiguriert ist, um den Steuerbefehl (STOP) an die genannte Steuereinheit (3) zur Verfügung zu stellen.

3. Aufsitzmäher (100) nach einem der Ansprüche 1 bis 2, **dadurch gekennzeichnet, dass** der Steuerbefehl (STOP) dazu geeignet ist, durch Mittel der Steuereinheit (3), für das Blockieren der Bewegung des Aufsitzmähers (100), zu sorgen, um einen sicheren Zustand für den Bediener herzustellen.

4. Aufsitzmäher (100) nach Anspruch 1, **dadurch gekennzeichnet, dass** der Detektor (2) ein Schalter ist, und dass der Steuerapparat (1) mindestens eine elektrische Widerstandskomponente (R) aufweist, welche in Serie mit dem Schalter (2) verbunden ist, wobei der Steuerapparat (1) so konfiguriert ist, um den Spannungsabfall (V) über die Serie des Schalters (2) und der mindestens einen elektrischen Widerstandskomponente (R), zu detektieren, und falls der Spannungsabfall (V) gleich eines Referenzwerts (Vref) ist, als Antwort, den Steuerbefehl (STOP) an die Steuereinheit (3) zur Verfügung zu stellen.

5. Aufsitzmäher (100) nach Anspruch 4, **dadurch gekennzeichnet, dass** in der mindestens einen elektrischen Widerstandskomponente (R) ein Widerstand richtig kalibriert ist.

6. Aufsitzmäher (100) nach Anspruch 4, **dadurch gekennzeichnet, dass** der Referenzspannungswert (Vref) ein Spannungswert gleich null (oder vernachlässigbar) ist.

## Revendications

1. Tondeuse autoportée (100) comprenant au moins un siège de conduite (101), un dispositif de sécurité (102) qui comprend un transducteur (2) conçu pour détecter la présence de l'opérateur sur le siège de conduite (101) et pour fournir, en tant que réponse, un premier signal électrique (V0), et une unité de commande (3) configurée pour la gestion électronique du déplacement de la tondeuse autoportée (100), ladite tondeuse autoportée (100) étant **caractérisée en ce qu'**elle comprend un appareil de protection de commande (1) configuré pour convertir ledit premier signal électrique (V0) en un deuxième signal électrique (V) et, si ledit deuxième signal électrique (V) est égal à une valeur de référence (Vref), en tant que réponse, fournir un signal de commande (STOP) à ladite unité de commande (3).

2. Tondeuse autoportée (100) selon la revendication 1, **caractérisée en ce que** ledit appareil de protection de commande (1) comprend un microcontrôleur (4) comprenant à son tour au moins une entrée (IN) configurée pour recevoir ledit deuxième signal électrique (V), et au moins une sortie (OUT) configurée pour fournir ledit signal de commande (STOP) à ladite unité de commande (3).

3. Tondeuse autoportée (100) selon l'une quelconque des revendications 1 à 2, **caractérisée en ce que** ledit signal de commande (STOP) est approprié pour commander, au moyen de l'unité de commande (3), le blocage du déplacement de la tondeuse autoportée (100) pour assurer une condition de sécurité pour l'opérateur.

4. Tondeuse autoportée (100) selon la revendication 1, **caractérisée en ce que** ledit transducteur (2) est un commutateur, et **en ce que** ledit appareil de protection de commande (1) comprend au moins un composant électrique résistif (R) connecté en série avec ledit commutateur (2), ledit appareil de protection de commande (1) étant configuré pour détecter la chute de tension (V) à travers la série du commutateur (2) et dudit au moins un composant électrique résistif (R) et, si ladite chute de tension (V) est égale à une valeur de référence (Vref) pour fournir, en tant que réponse, ledit signal de commande (STOP) à ladite unité de commande (3).

5. Tondeuse autoportée (100) selon la revendication 4, **caractérisée en ce que** ledit au moins un composant électrique résistif (R) est une résistance correctement étalonnée.

6. Tondeuse autoportée (100) selon la revendication 4, **caractérisée en ce que** ladite valeur de la tension de référence (Vref) est une valeur de tension égale à zéro (ou négligeable).
